# EUROPEAN PATENT APPLICATION

(11) **EP 4 442 169 A1**
(43) Date of publication of application: **09.10.2024**
(21) Application number: 22905877.1
(22) Date of filing: 19.07.2022
(51) Int. Cl.: A47J 27/04, A47J 36/00, A47J 37/06, E06B 3/70, F24C 15/02

(54) **DOOR ASSEMBLY AND COOKING APPLIANCE**

(30) Priority: 16.12.2021 CN 202111540867; 16.12.2021 CN 202123163553 U
(71) Applicant: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: TIAN, Yun, Foshan, Guangdong 528311 (CN); LIU, Cun, Foshan, Guangdong 528311 (CN); QI, Zhibin, Foshan, Guangdong 528311 (CN); ENDO, Minoru, Foshan, Guangdong 528311 (CN); FENG, Jingyong, Foshan, Guangdong 528311 (CN); XIAN, Weijie, Foshan, Guangdong 528311 (CN); DING, Weiwei, Foshan, Guangdong 528311 (CN); ZHONG, Peng, Foshan, Guangdong 528311 (CN)
(74) Representative: RGTH
(86) International application number: PCT/CN2022/106393
(87) International publication number: WO 2023/109115

(57) **Abstract**

The present application provides a door assembly (100) and a cooking appliance. The door assembly (100) includes: a pull rod structure (102), wherein a head portion of the pull rod structure (102) is provided with a clamping port (104); a stop structure (106), which is provided at the clamping port (104), wherein the stop structure (106) protrudes out of the pull rod structure (102) in the opening direction of the clamping port (104); and a door body (108), wherein the door body (108) includes a rotary shaft (130), and the rotary shaft (130) is clamped in the clamping port (104). By means of the provision of the stop structure (106), a clamping area of the clamping port (104) can be significantly increased, and in particular, a clamping dimension of which the rotary shaft (130) is clamped, in the opening direction, in the clamping port (104) can be increased, thereby increasing the stability of the rotary shaft (130) in the clamping port (104) and thus reducing the possibility of the rotary shaft (130) being disengaged from the clamping port (104).

## Description

### CROSS-REFERENCE TO RELATED APPLICATIONS

This disclosure claims priority to Chinese patent application No. 202111540867.2, filed with the China National Intellectual Property Administration on December 16, 2021, for the invention entitled "Door assembly and cooking appliance", and priority to Chinese patent application No. 202123163553.3, filed with the China National Intellectual Property Administration on December 16, 2021, for the invention entitled "Door assembly and cooking appliance", all of which are incorporated herein by reference.

### FIELD

The present disclosure relates to the field of cooking appliance, and more specifically, to a door assembly and a cooking appliance.

### BACKGROUND

In the related technology, a rotary shaft of the door body is connected through a clamping port of a pull rod structure. However, in the course of daily use, due to the unreasonable design of the pull rod structure and the clamping port, it often occurs that the rotary shaft disengages from the clamping port, resulting in the door body not being able to open and close.

### SUMMARY

The present disclosure is intended to solve at least one of the problems of the prior art.

To this end, a first aspect of the present disclosure provides a door assembly.

A second aspect of the present disclosure provides a cooking appliance.

A first aspect of the present disclosure provides a door assembly comprising: a pull rod structure, and a head portion of the pull rod structure being provided with a clamping port; a stop structure, provided at the clamping port, protruding from the pull rod structure in an opening direction of the clamping port; and a door body, the door body comprising a rotary shaft, the rotary shaft being clamped into the clamping port.

The door assembly provided in the present disclosure comprises a pull rod structure, a stop structure, and a door body. And the head portion has a clamping port, and the door body comprises a rotary shaft, and the rotary shaft is clamped inside the clamping port. In addition, the stop structure is provided on the rotary shaft and is located at the position of the clamping port; in the opening direction of the clamping port, the stop structure protrudes from the pull rod structure, which plays a certain stopping and limiting effect on the rotary shaft located in the clamping port to avoid the rotary shaft from disengaging from the clamping port. In one embodiment, the head portion of the pull rod structure is an end connected to the door body, and the tail portion of the pull rod structure is opposite to the head portion.

In one embodiment, in the door assembly provided in the present disclosure, the clamping port is provided with a stop structure at the position of the clamping port; and, the stop structure is provided protruding from the pull rod structure in the opening direction of the clamping port. In this way, by the provision of the stop structure, it is possible to significantly enhance the clamping area of the clamping port, in particular to enhance the clamping dimension of the clamping port to the rotary shaft in the opening direction of the clamping port, and to enhance the stability of the rotary shaft within the clamping port, and to reduce the possibility of the rotary shaft being disengaged from the clamping port.

In one embodiment, during the use of the door assembly, the user will frequently rotate the door body, so there is a possibility that the rotary shaft will disengage from the clamping port. The present disclosure, through the setting of the stop structure on the pull rod structure, is able to play the role of auxiliary restriction on location through the stop structure, to enhance the stability of the rotary shaft in the clamping port, reducing the possibility of the rotary shaft disengaging from the clamping port, and facilitating the daily use and operation of the user.

In some possible embodiments, the dimension of the stop structure protruding from the pull rod structure gradually increases from the tail portion of the pull rod structure to the head portion of the pull rod structure.

In this embodiment, the dimension of the stop structure protruding from the pull rod structure gradually increases from the tail portion of the pull rod structure to the head portion of the pull rod structure. That is, the dimension of the end of the stop structure protruding from the pull rod structure near the clamping port is relatively large, and the stop structure can effectively enhance the clamping area of the clamping port at the location of the clamping port, and thus enhance the stability of the rotary shaft within the clamping port. Therefore, during the use of the door assembly, the stop structure protruding from the pull rod structure can assist in restricting the rotary shaft in the clamping port, to ensure that the rotary shaft is stably located in the interior of the clamping port, and reducing the possibility of the rotary shaft disengaging from the clamping port.

In some possible embodiments, the head portion of the pull rod structure has a clamping portion, the clamping port is provided on the clamping portion, and the stop structure protrudes from the clamping portion.

In this embodiment, the head portion of the pull rod structure has a clamping portion, and the clamping port is provided on the clamping portion. In addition, the stop structure is provided protruding from the clamping portion and is within the clamping port.

That is, in the door assembly provided in the present disclosure, the clamping portion having a clamping port is provided at the head portion of the rotary shaft, and the rotary shaft of the door body is connected via the clamping port; the stop structure is provided on the clamping portion, and the stop structure is provided protruding from the clamping portion to enhance the depth of the clamping port, and to enhance the effect of the clamping of the clamping port on the rotary shaft, and to reduce the possibility that the rotary shaft will be disengaged from the clamping port.

In some possible embodiments, the clamping portion comprises: a first clamping end, the stop structure protruding from the first clamping end; and a second clamping end, spaced apart from the first clamping end, with the clamping port located between the first clamping end and the second clamping end.

In this embodiment, the clamping portion comprises a first clamping end and a second clamping end spaced apart. And the clamping port is disposed between the first clamping end and the second clamping end, and the stop structure is provided protruding from the first clamping end.

In this way, during the use of the door assembly, the rotary shaft of the door body is placed between the first clamping end and the second clamping end, and the rotary shaft is within the clamping port, and the rotary shaft is restricted by the first clamping end and the second clamping end, reducing the possibility of the rotary shaft disengaging from the clamping port. In addition, the first clamping end is provided closer to the tail portion of the pull rod structure than the second clamping end, and the stop structure is provided protruding from the first clamping end. In this way, the dimension of the first clamping end in the opening direction of the clamping port can be extended by the stop structure, to enhance the restriction effect of the first clamping end on the rotary shaft, and further reducing the possibility of the rotary shaft being disengaged from the clamping port.

In some possible embodiments, the clamping port comprises an first assembly surface and a second assembly surface which are set opposite each other, the second assembly surface being proximate to the head portion of the pull rod structure compared the first assembly surface; in the case where the door body is in a closed state, a first angle is formed between the first assembly surface and the vertical plane, the first angle being greater than 0° and less than or equal to 10°.

In this embodiment, the door body is in a vertical state in case the door body is in a closed state. In addition, the clamping port comprises an first assembly surface and a second assembly surface which are set opposite each other, the second assembly surface being proximate to the head portion of said the pull rod structure compared to the first assembly surface; specifically, the first assembly surface is disposed on the first clamping end, and the second assembly surface is disposed on the second clamping end and on the stop structure. In one embodiment, the first assembly surface is parallel to the second assembly surface.

Further, in the case where the door body is in the closed state, the first angle is formed between the first assembly surface and the vertical plane, and the first angle is greater than 0° and less than or equal to 10°. In this way, the present disclosure optimizes the opening direction of the clamping port, and ensures that when the door body is in the vertical state, the first assembly surface is set at an angle compared to the vertical plane, and ensures that the first angle formed between the first assembly surface and the vertical plane is greater than 0° and less than or equal to 10°. In this state, it can be ensured that the rotary shaft of the door body is stably located in the interior of the clamping port, and it can be ensured that the first assembly surface can effectively limit the rotary shaft in the clamping port, to reduce the possibility of the rotary shaft disengaging from the clamping port.

Correspondingly, in the case where the door body is in the closed state, a second angle is formed between the second assembly surface and the vertical plane, and the second angle is greater than 0° and less than or equal to 10°. In this way, the present disclosure optimizes the opening direction of the clamping port, and ensures that when the door body is in the vertical state, the second assembly surface is set at an angle compared to the vertical plane, and ensures that the second angle formed between the second assembly surface and the vertical plane is greater than 0° and less than or equal to 10°. In this state, it can be ensured that the rotary shaft of the door body is stably located in the interior of the clamping port, and it can be ensured that the second assembly surface can effectively limit the rotary shaft in the clamping port, to reduce the possibility of the rotary shaft disengaging from the clamping port.

In some possible embodiments, with the door body in the closed state, a first horizontal line is tangent to the bottom wall of the clamping port, a second horizontal line is tangent to the top of the stop structure, and the distance H between the first horizontal line and the second horizontal line is greater than or equal to D/2, and D is the diameter of the rotary shaft.

In this embodiment, in the case where the door body is in the closed state, the door body is in a vertical state. In one embodiment, in the case where the door body is in the closed state, the first horizontal line is tangent to the bottom wall of the clamping port, the second horizontal line is tangent to the top of the stop structure, and the distance H between the first horizontal line and the second horizontal line is greater than or equal to D/2, and D is the diameter of the rotary shaft. That is, the present disclosure optimizes the dimensions of the stop structure and ensures that the distance H between the first horizontal line and the second horizontal line is greater than or equal to half of the diameter D of the rotary shaft when the door body is in a closed state. In this way, it is possible to ensure the stopping effect of the stop structure on the rotary shaft in the clamping port, to effectively improve the stability of the rotary shaft in the clamping port and reducing the possibility of the rotary shaft disengaging from the clamping port.

In some possible embodiments, the stop structure and the pull rod structure are of one-piece structures.

In this embodiment, the stop structure and the pull rod structure are one-piece structures. In other words, during the manufacturing process of the pull rod structure, the above-mentioned stop structure can be formed directly. In this way, on the one hand, the manufacturing process of the pull rod structure can be simplified, and the manufacturing efficiency of the pull rod structure can be improved; on the other hand, the strength of the connection between the stop structure and the pull rod structure can be improved, and the strength of the stop structure for the rotary shaft can be improved, to avoid disengaging or damaging the stop structure.

In some possible embodiments, the door assembly further comprises: a mounting structure, the pull rod structure being rotationally connected to the mounting structure.

In this embodiment, the door assembly further comprises a mounting structure, the mounting structure being configured to connect the appliance body of the cooking appliance. In addition, the pull rod structure is rotationally connected to the mounting structure to realize a stable connection of the pull rod structure on the one hand and a rotational installation of the pull rod structure on the other hand.

In some possible embodiments, the door assembly further comprises: a damping structure, disposed on the mounting structure; and an abutting structure, disposed at the tail portion of the pull rod structure and for detachably abutting the damping structure.

In this embodiment, the door assembly further comprises the damping structure and the abutting structure. And the damping structure is provided on the mounting structure, and the damping structure is configured to realize the slow open and close of the door body; the abutting structure is provided at the tail portion of the pull rod structure, and the abutting structure is configured to detachably abut the damping structure, increase the contact area of the damping structure, and thus avoid the damping structure from detaching from the abutting structure.

In one embodiment, in the case where the door body is in the open state, the door body is in a horizontal state; at this time, the abutting structure is separated from the damping structure. In the process of switching the door body from the open state to the closed state, the abutting structure moves toward the damping structure under the driving force of the pull rod structure, and abuts against the damping structure. In this way, the damping structure can play a certain buffering effect on the door body, to ensure that the door body is slowly closed.

In some possible embodiments, a folded edge structure is provided at the tail portion of the pull rod structure, and the folded edge structure forms the abutting structure.

In this embodiment, the folded edge structure is provided at the tail portion of the pull rod structure, and the above-described abutting structure is formed by the folded edge structure. That is to say, in this disclosure, the folded edge structure is bent at the tail portion of the pull rod structure, and the above-mentioned abutting structure is directly defined by the folded edge structure. In this way, the present disclosure directly defines the abutting structure through the folded edge structure, which effectively reduces the difficulty of manufacturing the abutting structure and facilitates the processing and manufacturing of the abutting structure and the entire pull rod structure.

In some possible embodiments, the folded edge structure comprises: a first folded edge, connected to the tail portion of the pull rod structure; a second folded edge, connected to the first folded edge and for detachably abutting against the damping structure, the second folded edge being bent in a different direction than the first folded edge with respect to the pull rod structure.

In this embodiment, the folded edge structure comprises the first folded edge and the second folded edge. And the first folded edge is connected to the tail portion of the pull rod structure and the first folded edge is bent in a first direction with respect to the pull rod structure, and the second folded edge is connected to the first folded edge and the second folded edge is bent in a second direction with respect to the pull rod structure. That is, the first folded edge and the second folded edge are bent in opposite direction, and the second folded edge abuts against the damping structure.

In this way, the present disclosure makes the second folded edge have a larger area by the setting of the first folded edge and the second folded edge as described above, in particular by setting the first folded edge and the second folded edge to be bent in opposite direction. And the above-mentioned second folded edge is configured to abut the damping structure, which further ensures that the damping structure and the second folded edge can stably abut against each other, and avoids the occurrence of the damping structure detaching from the second folded edge.

In one embodiment, it may be that the first folded edge is bent toward the left side in relation to the pull rod structure and the second folded edge is bent toward the right side in relation to the pull rod structure; or it may be that the first folded edge is bent toward the right side in relation to the pull rod structure and the second folded edge is bent toward the left side in relation to the pull rod structure.

In some possible embodiments, the abutting structure and the pull rod structure are of one-piece structures.

In this embodiment, the abutting structure and the pull rod structure are one-piece structures. In other words, in the process of manufacturing the pull rod structure, the above-described abutting structure can be formed directly. In this way, on the one hand, the manufacturing process of the pull rod structure can be simplified, to enhance the manufacturing efficiency of the pull rod structure; on the other hand, the connection strength between the abutting structure and the pull rod structure can be increased, to enhance the contact strength of the abutting structure with the damping structure, and avoiding disengaging or damaging the abutting structure.

In some possible embodiments, the damping structure comprises a damper.

In this embodiment, the damping structure comprises a damper, which realizes the slow closing of the door body by the damping effect of the damper.

In some possible embodiments, the door assembly further comprises: an elastic member removably connected to the tail portion of the pull rod structure and the mounting structure, the elastic member is configured to reset the pull rod structure.

In this embodiment, the door assembly further comprises the elastic member. And the elastic member is removably connected to the tail portion of the pull rod structure and the mounting structure, and is configured to reset of the pull rod structure.

In one embodiment, in the process of switching the door body from the closed state to the open state, the elastic member is stretched, and the elasticity of the elastic member may further enhance the door opening strength, to enhance the user's hand-feel when opening the door body. In the process of switching the door body from the open state to the closed state, the elastic member is gradually restored to its original state, and the elastic force of the elastic member may further reduce the closing strength, to facilitate the user to close the door body.

A second aspect of the present disclosure provides a cooking appliance comprising: an appliance body; the door assembly according to the first aspect of the present disclosure, a door body of the door assembly being open-closely connected to the appliance body, and a mounting structure of the door assembly being provided on the appliance body.

The present disclosure provides a cooking appliance comprising a door assembly as in the first aspect of the present disclosure. Accordingly, it has all the beneficial effects of the door assembly described above, which will not be discussed in detail herein.

Further, the cooking appliance comprises an appliance body. And a door body of the door assembly is open-closely connected to the appliance body, and a mounting structure of the door assembly is provided on the appliance body.

In some possible embodiments, the cooking appliance comprise: a microwave oven, an oven, a steamer, or a microwave steaming and baking all-in-one machine.

In this embodiment, the cooking appliances provided in this disclosure comprise, but are not limited to, the following products: a microwave oven, an oven, a steamer, or a microwave steaming and baking all-in-one machine.

Additional aspects and advantages of the present disclosure will become apparent in the following descriptive sections, or by the practice of the disclosure.

### BRIEF DESCRIPTION OF THE DRAWINGS

The foregoing and/or additional embodiments of the present disclosure will become apparent and readily understood from the description of the embodiments in conjunction with the following accompanying drawings, and:
FIG. 1 is a first structural schematic diagram of a door assembly according to an embodiment of the present disclosure (the door body is in a closed state);
FIG. 2 is a second structural schematic diagram of a door assembly according to one embodiment of the present disclosure (the door body is in an open state);
FIG. 3 is a partially enlarged view at A of the door assembly shown in FIG. 1;
FIG. 4 is a first structural schematic diagram of a pull rod structure in a door assembly according to an embodiment of the present disclosure;
FIG. 5 is a second structural schematic diagram of a pull rod structure in a door assembly according to an embodiment of the present disclosure;
FIG. 6 is a third structural schematic diagram of a pull rod structure in a door assembly according to an embodiment of the present disclosure;
FIG. 7 is a partially enlarged view at B of the door assembly shown in FIG. 5;
FIG. 8 is a partially enlarged view at C of the door assembly shown in FIG. 6.

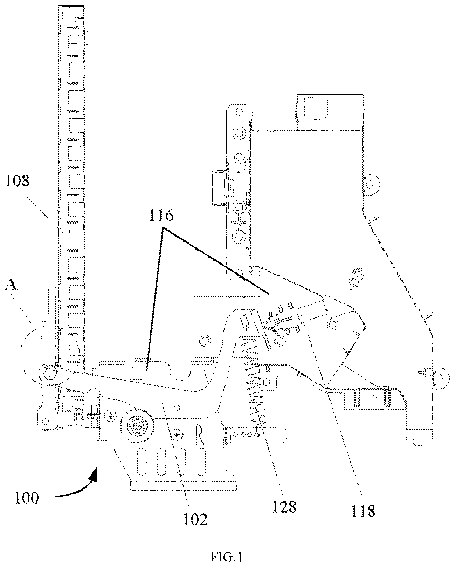

And the corresponding relationships between the reference signs and the component names in FIG. 1 through FIG.8 are as follows:
100 door assembly, 102 pull rod structure, 104 clamping port, 106 stop structure, 108 door body, 110 clamping portion, 112 first clamping end, 114 second clamping end, 116 mounting structure, 118 damping structure, 120 abutting structure, 122 folded edge structure, 124 first folded edge, 126 second folded edge, 128 elastic member, 130 rotary shaft, 132 first assembly surface, 134 second assembly surface, 136 bend portion, 138 head portion, 140 tail portion.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many specific details are set forth in the following description in order to facilitate a full understanding of the present disclosure, however, the present disclosure may further be implemented in other ways different from those described herein, and thus the scope of protection of the present disclosure is not limited by the specific embodiments disclosed below.

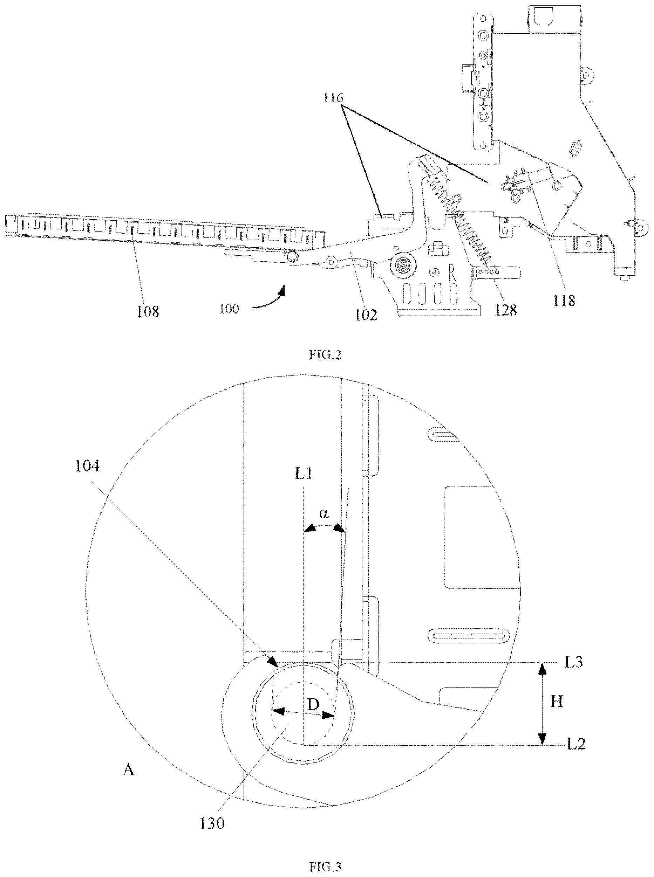

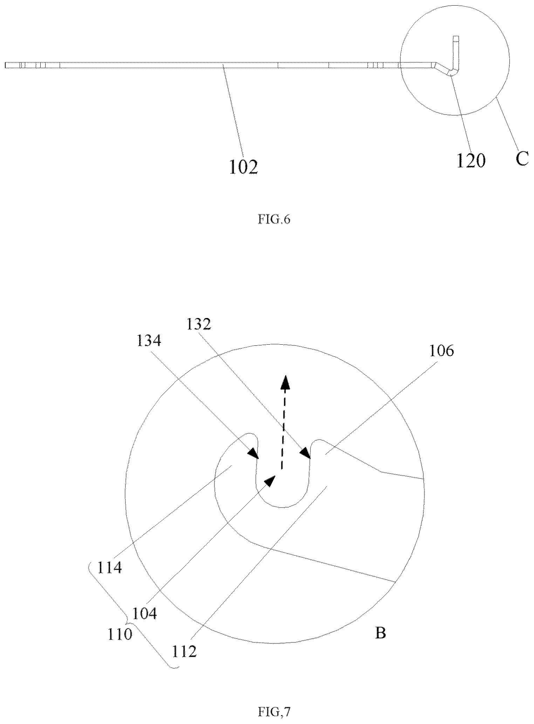

The door assembly 100 and the cooking appliance provided according to some embodiments of the present disclosure are described below with reference to FIGS. 1 to 8. The dashed line L1 in FIG. 3 indicates a vertical plane, L2 indicates a first horizontal line, and L3 indicates a second horizontal line. Furthermore, the opening direction of the clamping port 104 is indicated by the dashed arrow in FIG. 7.

As shown in FIGS. 1 and 2, a first embodiment of the present disclosure provides a door assembly 100 comprising a pull rod structure 102, a stop structure 106, and a door body 108.

And as shown in FIGS. 3, 4, and 5, the head portion 138 of the pull rod structure 102 is provided with the clamping port 104, the door body 108 comprises the rotary shaft 130, and the rotary shaft 130 is clamped to the interior of the clamping port 104. In addition, the stop structure 106 is provided on the rotary shaft 130 and is disposed at the position of the clamping port 104; in the opening direction of the clamping port 104, the stop structure 106 protrudes out of the pull rod structure 102, to play a certain stopping and limiting effect on the rotary shaft 130 disposed within the clamping port 104, and avoiding the rotary shaft 130 from disengaging from the interior of the clamping port 104. In one embodiment, the head portion 138 of the pull rod structure 102 is an end connected to the door body 108, and the tail portion 140 of the pull rod structure 102 is opposite to the head portion 138.

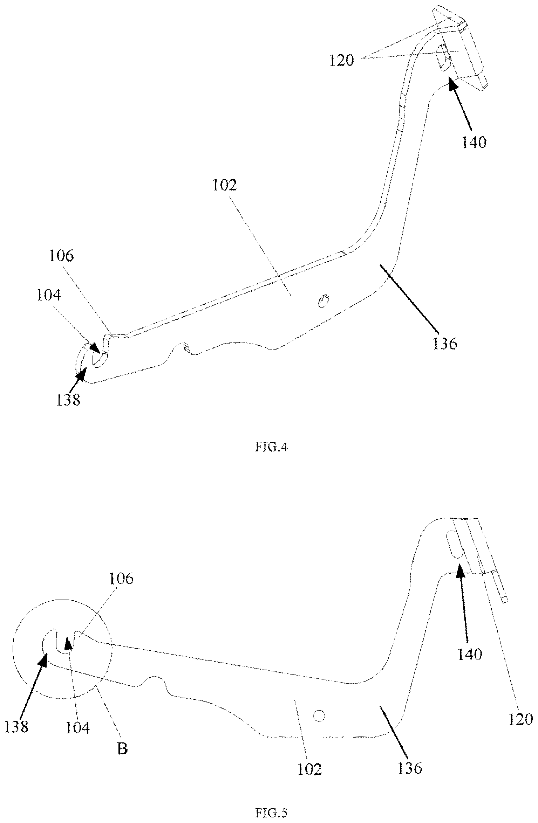

In particular, as shown in FIGS. 4 and 5, in the door assembly 100 provided in the present disclosure, the clamping port 104 is provided with a stop structure 106 at the position of the clamping port 104; and, the stop structure 106 is provided protruding from the pull rod structure 102 in the opening direction of the clamping port 104. In this way, by the provision of the stop structure 106, it is possible to significantly enhance the clamping area of the clamping port 104, in particular to enhance the clamping dimension of the clamping port 104 to the rotary shaft 130 in the opening direction of the clamping port 104, and to enhance the stability of the rotary shaft 130 within the clamping port 104, and to reduce the possibility of the rotary shaft 130 disengaging from the clamping port 104.

In one embodiment, during the use of the door assembly 100, the user will frequently rotate the door body 108, and thus there exists a possibility that the rotary shaft 130 will disengage from the clamping port 104. The present disclosure, through the setting of the stop structure 106 on the pull rod structure 102, can play the role of auxiliary restriction through the stop structure 106, and thus improve the stability of the rotary shaft 130 in the clamping port 104, reduce the possibility of the rotary shaft 130 disengaging from the clamping port 104, and facilitate the daily use and operation of the user.

A second embodiment of the present disclosure provides a door assembly 100based on the first embodiment:

As shown in FIGS. 4, 5, and 7, the dimension of the stop structure 106 protruding from the pull rod structure 102 gradually increases from the tail portion 140 of the pull rod structure 102 to the head portion 138 of the pull rod structure 102. That is, the dimension of the end of the stop structure 106 protruding from the pull rod structure 102 near the clamping port 104 is relatively large, which enables the stop structure 106 to effectively enhance the clamping area of the clamping port 104 at the location of the clamping port 104, and to enhance the stability of the rotary shaft 130 within the clamping port 104.

Thus, during the use of the door assembly 100, the stop structure 106 of the protruding pull rod structure 102 can assist in limiting the rotary shaft130 within the clamping port 104, to ensure that the rotary shaft 130 is stabilized in the interior of the clamping port 104, and reducing the possibility that the rotary shaft 130 may disengage from the interior of the clamping port 104.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 being disengaged from the clamping port 104, and will not be discussed in detail herein.

A third embodiment of the present disclosure provides a door assembly 100based on the first embodiment and the second embodiment:

As shown in FIG. 7, the pull rod structure 102 further comprises a clamping portion 110. And the clamping portion 110 is provided on the head portion 138 of the pull rod structure 102, and the clamping port 104 is provided on the clamping portion 110. In addition, the stop structure 106 is provided protruding from the clamping portion 110 and is within the clamping port 104.

That is, in the door assembly 100 provided in the present disclosure, the clamping portion 110 having the clamping port 104 is provided at the head portion 138 of the rotary shaft 130 and connects the rotary shaft 130 of the door body 108 via the clamping port 104; the stop structure 106 is provided on the clamping portion 110, and the stop structure 106 is provided protruding out of the clamping portion 110 to elevate the depth of the clamping port 104, to enhance the effect of the clamping of the clamping port 104 on the rotary shaft 130, and reduce the possibility of the rotary shaft 130 disengaging from the interior of the clamping port 104.

In this embodiment, further, as shown in FIG. 7, the clamping portion 110 comprises a first clamping end112 and a second clamping end 114 spaced apart. And the clamping port 104 is disposed between the first clamping end 112 and the second clamping end114, and the stop structure 106 is provided protruding from the first clamping end 112.

In this way, during use of the door assembly 100, the rotary shaft 130 of the door body 108 is placed between the first clamping end 112 and the second clamping end 114, and the rotary shaft 130 is within the clamping port 104, and the rotary shaft 130 is limited by the first clamping end 112 and the second clamping end 114, reducing the possibility of the rotary shaft 130 disengaging from the clamping port 104. In addition, the first clamping end 112 is provided closer to the tail portion 140 of the pull rod structure 102 than the second clamping end 114, and the stop structure 106 is provided protruding from the first clamping end 112.

In this way, the dimension of the first clamping end 112 in the opening direction of the clamping port 104 can be extended by the stop structure 106, to enhance the limiting effect of the first clamping end 112 on the rotary shaft 130, and further reducing the possibility of the rotary shaft 130 being disengaged from the interior of the clamping port 104.

In this embodiment, further, as shown in FIGS. 4, 5, and 7, the stop structure 106 and the pull rod structure 102 are of a one-piece structure. That is, in the process of manufacturing the pull rod structure 102, the above stop structure 106 can be formed directly, and on the one hand, the manufacturing process of the pull rod structure 102 can be simplified, and the manufacturing efficiency of the pull rod structure 102 can be improved; on the other hand, the strength of the connection between the stop structure 106 and the pull rod structure 102 can be increased, and the strength of the stop structure 106 in stopping the rotary shaft 130 can be improved, and disengaging or damaging of the stop structure 106 can be avoided..

In this embodiment, specifically, the clamping portion 110 is a hook.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 disengaging from the clamping port 104, and will not be discussed in detail herein.

A fourth embodiment of the present disclosure provides a door assembly 100based on the third embodiment:

As shown in FIGS. 1 and 3, in the case where the door body 108 is in the closed state, the door body 108 is in the vertical state. Furthermore, as shown in FIG. 7, the clamping port 104 comprises an opposing first assembly surface 132 and a second assembly surface 134, the second assembly surface 134 being proximate to the head portion 138 of said the pull rod structure102 compared to the first assembly surface 132; specifically, the first assembly surface 132 is disposed on the first clamping end 112, and the second assembly surface 134 is disposed on the second clamping end 114 and the stop structure 106. In one embodiment, the first assembly surface 132 is parallel to the second assembly surface 134.

In this embodiment, further, as shown in FIG. 3, with the door body 108 in the closed state, a first angle α is formed between the first assembly surface 132 and the vertical planeL1, and the first angle α is greater than 0° and less than or equal to 10°.

In this way, the present disclosure optimizes the opening direction of the clamping port 104 and ensures that when the door body 108 is in a vertical state, the first assembly surface 132 is set at an angle compared to the vertical planeL1, and ensures that the first angle α formed between the first assembly surface 132 and the vertical planeL1 is greater than 0° and less than or equal to 10°. In this state, it can be ensured that the rotary shaft 130 of the door body 108 is stably in the interior of the clamping port 104, and it can be ensured that the first assembly surface 132 can effectively restrict the rotary shaft 130 in the clamping port 104, to reduce the possibility of the rotary shaft 130 disengaging from the clamping port 104.

In one embodiment, the first angle α formed between the first assembly surface 132 and the vertical planeL1 may be 1°, 2°, 3°, 4°, 5°, 6°, 7°, 8°, 9°, 10°, and the like, which will not be enumerated herein.

Correspondingly, with the door body 108 in the closed state, a second angle (not shown in the figures) is formed between the second assembly surface 134 and the vertical planeL1, and the second angle is greater than 0° and less than or equal to 10°.

In this way, the present disclosure optimizes the opening direction of the clamping port 104 and ensures that when the door body 108 is in a vertical state, the second assembly surface 134 is set at an angle compared to the vertical plane, and ensures that the second angle formed between the second assembly surface 134 and the vertical planeL1 is greater than 0° and less than or equal to 10°. In this state, it can be ensured that the rotary shaft 130 of the door body 108 is stably located inside the clamping port 104, and it can be ensured that the second assembly surface 134 can effectively restrict the rotary shaft 130 inside the clamping port 104, to reduce the possibility of the rotary shaft 130 disengaging from the clamping port 104.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 disengaging from the clamping port 104, and will not be discussed in detail herein.

A fifth embodiment of the present disclosure provides a door assembly 100based on the third and fourth embodiments:

As shown in FIGS. 1 and 3, in the case where the door body 108 is in the closed state, the door body 108 is in a vertical state. In one embodiment, in the case where the door body 108 is in the closed state, the first horizontal line L2 is tangent to the bottom wall of the clamping port 104, the second horizontal line L3 is tangent to the top of the stop structure 106, and the distance H between the first horizontal line L2 and the second horizontal line L3 is greater than or equal to D/2, and D is a diameter of the rotary shaft 130.

The present disclosure optimizes the dimensions of the stop structure 106 and ensures that the distance H between the first horizontal line L2 and the second horizontal line L3 is greater than or equal to half of the diameter D of the rotary shaft 130 when the door body 108 is in a closed state. In this way, it is possible to ensure the stopping effect of the stop structure106 on the rotary shaft 130 within the clamping port 104, to effectively enhance the stability of the rotary shaft 130 within the clamping port 104 and reducing the possibility of the rotary shaft 130 disengaging from the clamping port 104.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 disengaging from the clamping port 104, and will not be discussed in detail herein.

A sixth embodiment of the present disclosure provides a door assembly 100based on the first embodiment, the second embodiment, the third embodiment, the fourth embodiment and the fifth embodiment:

As shown in FIGS. 1 and 2, the door assembly 100 further comprises a mounting structure 116, the mounting structure 116 being configured to connect the appliance body of the cooking appliance. In addition, the pull rod structure 102 is rotationally connected to the mounting structure 116 to realize a stable connection of the pull rod structure 102 on the one hand and a rotational installation of the pull rod structure 102 on the other hand.

In one embodiment, the mounting structure 116 may utilize a mounting plate, which may be mounted to the appliance body of the cooking appliance by screws.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 being disengaged from the clamping port 104, and will not be discussed in detail herein.

A seventh embodiment of the present disclosure provides a door assembly 100based on the sixth embodiment:

As shown in FIG. 1, FIG. 2, FIG. 6, and FIG. 8, the door assembly 100 further comprises a damping structure 118 and an abutting structure 120, and the damping structure 118 is provided on the mounting structure 116, and the damping structure 118 is configured to realize the slow opening and closing of the door body 108; the abutting structure 120 is provided on the tail portion 140 of the pull rod structure 102, and the abutting structure 120 is configured to detachably abut the damping structure 118, increasing the contact area of the damping structure 118, and thereby avoiding the damping structure 118 from detaching from the pull rod structure 102.

In one embodiment, as shown in FIG. 2, in the case where the door body 108 is in the open state, the door body 108 is in a horizontal state; at this time, the abutting structure 120 is separated from the damping structure 118. In the process of switching the door body 108 from the open state to the closed state, in the process of switching the pull rod structure 102 from the open state to the closed state, the abutting structure 120 moves toward the damping structure 118 under the driving of the pull rod structure 102 and abuts the damping structure 118. In this way, the damping structure 118 can play a certain cushioning effect on the door body 108, to ensure that the door body 108 is slowly closed.

Accordingly, the door assembly 100 provided in this embodiment enhances the clamping area of the clamping port 104 by the stop structure 106, in particular, enhances the clamping dimension of the clamping port 104 to the rotary shaft 130 in the opening direction of the clamping port 104, and thus enhances the stability of the rotary shaft 130 within the clamping port 104, and thus reduces the possibility of the rotary shaft 130 disengaging from the clamping port 104.

Moreover, the door assembly 100 further abuts the damping structure 118 by the abutting structure 120, which expands the base area of the abutting structure 120 and the damping structure 118, reduces the possibility of the damping structure 118disengaging, and thus ensures that the damping structure 118 can stably abut the abutting structure 120, and thus realizes the slow closure of the door body 108 by the damping structure.

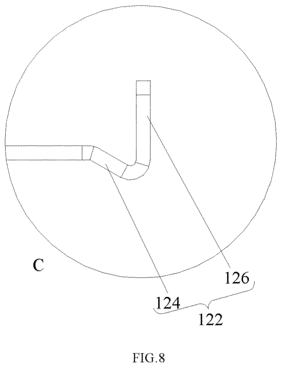

In this embodiment, furthermore, as shown in FIG. 8, the tail portion 140 of the pull rod structure 102 is provided with a folded edge structure 122, and the abutting structure 120 is formed by the folded edge structure 122, i.e., in the present disclosure, the folded edge structure 122 is formed at the tail portion 140 of the pull rod structure 102, and directly defines the abutting structure 120 by the folded edge structure 122. In this way, the present disclosure directly defines the abutting structure 120 by the folded edge structure 122. In this way, the present disclosure directly defines the abutting structure 120 by the folded edge structure 122, which effectively reduces the difficulty of manufacturing the abutting structure 120 and facilitates the processing and manufacturing of the abutting structure 120 and the entire pull rod structure 102.

In this embodiment, further, as shown in FIG. 8, the folded edge structure 122 comprises a first folded edge 124 and a second folded edge 126. And the first folded edge 124 is attached to the tail portion 140 of the pull rod structure 102 and the first folded edge 124 is bent in a first direction with respect to the pull rod structure 102; the second folded edge 126 is attached to the first folded edge 124 and the second folded edge 126 is bent in a second direction with respect to the first folded edge 124in a second direction. That is, the first folded edge 124 and the second folded edge 126 are bent in opposite direction and abut against the damping structure 118 by the second folded edge 126.

In this way, the present disclosure makes the second folded edge 126 have a larger area by the above-described setting of the first folded edge 124 and the second folded edge 126, in particular by setting the first folded edge 124 and the second folded edge 126 to bend in opposite direction. And the second folded edge 126 is for abutting with the damping structure 118, which further ensures that the damping structure 118 and the second folded edge 126 can abut stably, and avoids the occurrence of the damping structure 118 detaching from the second folded edge 126.

In one embodiment, it may be that the first folded edge 124 is bent toward the left side with respect to the pull rod structure102 and the second folded edge 126 is bent toward the right side with respect to the pull rod structure 102; or it may be that the first folded edge 124 is bent toward the right side with respect to the pull rod structure102 and the second folded edge 126 is bent toward the left side with respect to the pull rod structure 102.

In this embodiment, further, as shown in FIGS. 6 and 8, the abutting structure 120 and the pull rod structure 102 are of a one-piece structure. That is, in the process of manufacturing the pull rod structure 102, the above-described abutting structure 120 can be formed directly, and, on the one hand, the manufacturing process of the pull rod structure 102 can be simplified, and thus the manufacturing efficiency of the pull rod structure 102 can be improved; on the other hand, the strength of the connection between the abutting structure 120 and the pull rod structure 102 can be improved, thus improving the resisting strength of the abutting structure 120 to the damping structure 118 and avoiding the abutting structure 120 from disengaging or being damaged.

In this embodiment, further, as shown in FIGS. 1 and 2, the damping structure 118 comprises a damper, which realizes the slow closing of the door body 108 by the damping effect of the damper.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 disengaging from the clamping port 104, and will not be discussed in detail herein.

An eighth embodiment of the present disclosure provides a door assembly 100based on the first embodiment, the second embodiment, the third embodiment, the fourth embodiment, the fifth embodiment, the sixth embodiment, and the seventh embodiment:

As shown in FIGS. 1 and 2, the door assembly 100 further comprises an elastic member 128. And the elastic member 128 is removably connected to the tail portion 140 of the pull rod structure102 and the mounting structure 116 and is configured to effectuate a reset of the pull rod structure 102.

In one embodiment, as shown in FIGS. 1 and 2, in the process of switching the door body 108 from the closed state to the open state, the elastic member 128 is stretched, and the elastic force of the elastic member 128 may further enhance the door opening strength, which enhances the user's hand-feel when opening the door body 108. In the process of switching the door body 108 from the open state to the closed state, the elastic member 128 is gradually restored to its original state, and the elastic force of the elastic member 128 further reduces the door closing strength, which facilitates the user to close the door body 108.

In one embodiment, as shown in FIGS. 1 and 2, the elastic member 128 may be a spring.

In addition, the door assembly 100 provided in this embodiment, which has all the beneficial effects of the door assembly 100 of the first embodiment, is capable of enhancing the stability of the rotary shaft 130 within the clamping port 104, which reduces the possibility of the rotary shaft 130 being disengaged from the clamping port 104, and will not be discussed in detail herein.

Based on the first embodiment to the eighth embodiment, as shown in FIGS. 4 and 5, a bent portion 136 is provided in the middle of the pull rod structure102, and a head portion138 and a tail portion 140 of the pull rod structure102 are disposed on both sides of the bent portion 136. In one embodiment, when the door body 108 is in the open state, the tail portion 140 of the pull rod structure102 is provided inclined toward the top.

A ninth embodiment of the present disclosure provides a cooking appliance (not shown in the figures) comprising an appliance body, and a door assembly 100 as in any of the above embodiments.

The cooking appliance provided in the present disclosure comprises a door assembly 100 as in any of the above embodiments. Thus, having all the beneficial effects of the door assembly 100 described above.

In addition, the door assembly 100 provided in this embodiment is capable of enhancing the stability of the rotary shaft 130 within the clamping port 104, which reduces the possibility of the rotary shaft 130 disengaging from the clamping port 104, which will not be discussed in detail herein.

In addition, the cooking appliance comprises an appliance body (not shown in the figures). And the door body 108 of the door assembly 100 is open-closely connected to the appliance body, and the mounting structure 116 of the door assembly 100 is provided on the appliance body.

Further, the cooking appliance provided in this disclosure comprise, but are not limited to, the following products: a microwave oven, an oven, a steamer, or a microwave steaming and baking all-in-one machine.

Further, the door assembly 100 provided in the present disclosure can be applied not only to cooking appliances, but also to refrigerators, washing machines, and other products that require opening and closing of doors, which will not be enumerated herein.

Therefore, as shown in FIGS. 1 and 2, the present disclosure improves the pull rod structure 102 of the door assembly 100 to ensure that, on the basis that the door body 108 can be opened and closed, the problem that the rotary shaft 130 of the door body 108 will disengage from the interior of the clamping port 104 of the pull rod structure 102 in the related art can be improved, and the problem of the damping structure 118disengagingin the related art can be improved.

In one embodiment, as shown in FIGS. 4 and 5, in the present disclosure a stop structure 106 is provided on the pull rod structure 102, and the stop structure 106 is disposed at the position of the clamping port 104; and, in the opening direction of the clamping port 104, the stop structure 106 protrudes out of the pull rod structure 102. In this way, the stop structure 106 is able to play a certain stopping and restricting effect on the rotary shaft 130 disposed inside the clamping port 104,to avoid the rotary shaft 130 from disengaging from the interior of the clamping port 104. In one embodiment, the head portion 138 of the pull rod structure102 is provided with a clamping portion 110, and the clamping port 104 is provided on the clamping portion110.

Further, as shown in FIGS. 1 and 3, the door body 108 has a closed state, and in the case where the door body 108 is in the closed state, the door body is in a vertical state. In addition, as shown in FIG. 7, the clamping portion 110 comprises a first clamping end 112 and a second clamping end 114 spaced apart, and the stop structure 106 is provided protruding from the first clamping end 112; a first assembly surface 132 of the clamping port 104 is disposed on the first clamping end 112, and a second assembly surface 134 of the clamping port 104 is disposed on the second clamping end 114.

In one embodiment, as shown in FIG. 3, in the case where the door body 108 is in the closed state, a first angle α is formed between the first assembly surface 132 and the vertical plane L1, and the first angle α is greater than 0° and less than or equal to 10°. Correspondingly, a second angle is formed between the second assembly surface 134 and the vertical plane L1, and the second angle is greater than 0° and less than or equal to 10°. In this state, it can be ensured that the rotary shaft 130 of the door body 108 is stably located inside the clamping port 104, and that the first assembly surface 132 and the second assembly surface 134 can effectively restrict the rotary shaft 130 inside the clamping port 104, and reduce the possibility of the rotary shaft 130 disengaging from the clamping port 104.

In one embodiment, as shown in FIG. 3, in the case where the door body 108 is in a closed state, the distance H between the first horizontal line L2 and the second horizontal line L3 is greater than or equal to D/2, and the first horizontal line L2 is tangent to the bottom wall of the clamping port 104, the second horizontal line L3 is tangent to the top of the stop structure, and D is the diameter of the rotary shaft 130. In this way, it is possible to ensure the stopping effect of the stop structure106 on the rotary shaft 130 within the clamping port 104, to effectively enhance the stability of the rotary shaft 130 within the clamping port 104 and reducing the possibility of the rotary shaft 130 disengaging from the clamping port 104.

Further, as shown in FIG. 2, the door body 108 further comprises a second working position. In the case where the door body 108 is in the second working position, the door body 108 is in an open state.

In one embodiment, as shown in FIGS. 1 and 2, the door assembly 100 further comprises a damping structure 118 and an abutting structure 120; the damping structure 118 is disposed on the mounting structure 116, and the abutting structure 120 is disposed at the tail portion 140 of the pull rod structure 102. In the case where the door body 108 is in the second working position, the door body 108 is in the open state; at this time, the abutting structure 120 and the damping structure 118 are separated from each other. During the switching of the door body 108 from the open state to the closed state, during the switching of the pull rod structure 102 from the open state to the closed state, the abutting structure 120 moves toward the damping structure 118 driven by the pull rod structure 102 and abut the damping structure 118. In this way, the damping structure 118 can play a certain cushioning effect on the door body 108, to ensure that the door body 108 is slowly closed.

In one embodiment, as shown in FIGS. 7 and 8, the tail portion 140 of the pull rod structure 102 is provided with a folded edge structure 122, and the above-described abutting structure 120 is formed by the folded edge structure 122. and the folded edge structure 122 comprises a first folded edge 124 and a second folded edge 126; the first folded edge 124 is connected to the tail portion 140 of the pull rod structure 102 and the first folded edge 124 is bent toward a first direction in comparison with the pull rod structure 102; the second folded edge 126 is connected to the first folded edge 124, and the second folded edge 126 is bent in a second direction compared to the first folded edge 124. In this way, the first folded edge 124 and the second folded edge 126 are bent in opposite direction, and the second folded edge 126 has a larger area, ensuring that the damping structure 118 and the second folded edge 126 can abut stably, and avoiding that the damping structure 118 disengages from the second folded edge 126.

Therefore, the door assembly provided in the present disclosure can, on the one hand, enhance the stability of the rotary shaft 130 within the clamping port 104, to reduce the possibility of the rotary shaft 130 disengaging from the clamping port 104, and on the other hand, it can increase the contact area between the damping structure 118 and the pull rod structure 102, to prevent the damping structure 118 from disengaging from the pull rod structure 102.

In summary, the present disclosure can significantly improve the stability of the door assembly 100 when it is used, and ensure that the door body 108 smoothly switches between the closed state and the second working position. Moreover, the door assembly 100 provided in the present disclosure can be used not only for cooking appliances such as microwave ovens, ovens, steamers, or microwave steaming and baking all-in-one machines, but also for refrigerators, washing machines, and other products that require opening and closing of the door, which will not be enumerated herein.

In the description of the present disclosure, the term "more than one" refers to two or more, and unless otherwise expressly limited, the terms "up", "down", etc. indicate an orientation or positional relationship based on the orientation or positional relationship shown in the accompanying drawings. The terms "up", "down", etc. indicate an orientation or positional relationship based on the orientation or positional relationship shown in the accompanying drawings, and are intended only to facilitate the description of the present disclosure and to simplify the description, and are not intended to indicate or imply that the device or element referred to must have a specific orientation, be constructed and operated with a specific orientation, and therefore are not to be construed as a limitation of the present disclosure; and the terms "connecting", "mounting", "securing The terms "connecting", "mounting", "fixing", etc. are to be broadly construed, for example, "connecting" may be fixed, removable, or integrally connected, and may be directly connected or indirectly connected through an intermediary medium. Those of ordinary skill in the art may understand the specific meaning of the above terms in the present disclosure according to the specific circumstances.

In the description of this specification, the terms "an embodiment", "some embodiments", "specific embodiments", etc. are described to mean specific features described in connection with the embodiment or example, structure, material, or feature described in connection with that embodiment or example is comprised in at least one embodiment or example of the present disclosure. In this specification, schematic expressions of the above terms do not necessarily refer to the same embodiment or example. Moreover, the specific features, structures, materials, or characteristics described may be combined in any one or more of the embodiments or examples in a suitable manner.

The above are only the some embodiments of the present disclosure, and are not intended to limit the present disclosure, which may be subject to various changes and variations for those skilled in the art. Any modifications, equivalent substitutions, improvements, etc. made within the spirit and principles of this disclosure shall be comprised in the scope of protection of this disclosure.

## Claims

1. a door assembly, comprising:
a pull rod structure with a head portion having a clamping port;
a stop structure, provided at the clamping port, protruding from the pull rod structure in an opening direction of the clamping port;
a door body, comprising a rotary shaft, the rotary shaft being clamped into the clamping port.

2. The door assembly according to claim 1, wherein,
a dimension of the stop structure protruding from the pull rod structure gradually increases from a tail portion of the pull rod structure to a head portion of the pull rod structure

3. The door assembly according to claim 1, wherein,
a head portion of the pull rod structure is provided with a clamping portion, the clamping port is provided on the clamping portion, and the stop structure protrudes from the clamping portion

4. The door assembly according to claim 3, wherein the clamping portion comprises:
a first clamping end, the stop structure protruding from the first clamping end;
a second clamping end, spaced apart from the first clamping end, wherein the clamping port located between the first clamping end and the second clamping end.

5. The door assembly according to any one of claims 1 to 4, wherein,
the clamping port comprises a first assembly surface and a second assembly surface which are set opposite to each other, the second assembly surface being proximate to the head portion of the pull rod structure as compared to the first assembly surface;
with the door body in a closed state, a first angle is formed between the first assembly surface and a vertical plane, the first angle being greater than 0° and less than or equal to 10°.

6. The door assembly according to any one of claims 1 to 4, wherein,
with the door body in a closed state, a first horizontal line is tangent to a bottom wall of the clamping port, a second horizontal line is tangent to a top portion of the stop structure, and a distance H between the first horizontal line and the second horizontal line is greater than or equal to D/2, wherein D is a diameter of the rotary shaft.

7. The door assembly according to any one of claims 1 to 4, wherein,
the stop structure and the pull rod structure are of one-piece structure

8. The door assembly according to any one of claims 1 to 4, further comprising:
a mounting structure, the pull rod structure being rotatably connected to the mounting structure

9. The door assembly according to claim 8, further comprising:
a damping structure, provided on the mounting structure;
an abutting structure, disposed at the tail portion of the pull rod structure and for detachably abutting the damping structure

10. The door assembly according to claim 9, wherein,
a folded edge structure provided at the tail portion of the pull rod structure, and the folded edge structure forming the abutting structure

11. The door assembly according to claim 10, wherein the folded edge structure comprises:
a first folded edge, connected to the tail portion of the pull rod structure;
a second folded edge, connected to the first folded edge and for detachably abutting the damping structure, the second folded edge being bent in a different direction than the first folded edge with respect to the pull rod structure

12. The door assembly according to claim 9, wherein, further comprising:
the abutting structure and the pull rod structure are of one-piece structure; and/or
the damping structure comprises a damper.

13. The door assembly according to claim 9, wherein further comprising:
an elastic member removably connected to the tail portion of the pull rod structure and the mounting structure, the elastic member being used for resetting the pull rod structure

14. A cooking appliance, comprising:
an appliance body;
a door assembly according to any one of claims 1 to 13, a door body of the door assembly being connected to the appliance body wherein the door body being switchable between an open state and a closed state, and a mounting structure of the door assembly being provided on the appliance body

15. The cooking appliance according to claim 14, wherein,
the cooking appliance comprises: a microwave oven, an oven, a steamer, or a microwave steaming and baking all-in-one machine.
